# EUROPEAN PATENT SPECIFICATION

(11) **EP 4 299 251 B1**
(45) Date of publication and mention of the grant of the patent: **09.07.2025**
(21) Application number: 21928134.2
(22) Date of filing: 27.12.2021
(51) Int. Cl.: F16D 27/108, F16D 27/118, F16D 27/14, B25B 23/147, B25F 5/00, F16D 27/01, F16D 43/00, F16D 27/02

(54) **ELECTRIC TOOL**
ELEKTROWERKZEUG
OUTIL ÉLECTRIQUE

(30) Priority: 26.02.2021 JP 2021030833
(43) Date of publication of application: 03.01.2024
(73) Proprietor: Panasonic Holdings Corporation, Osaka 571-8501 (JP)
(72) Inventor: MOMOEDA, Kotaro Panasonic Intellectual Property, Kadoma-shi, Osaka 571-0057 (JP); MURUI, Itaru Panasonic Intellectual Property, Kadoma-shi, Osaka 571-0057 (JP); NAKAMURA, Akito Panasonic Intellectual Property, Kadoma-shi, Osaka 571-0057 (JP)
(74) Representative: Müller-Boré & Partner Patentanwälte PartG mbB
(86) International application number: PCT/JP2021/048528
(87) International publication number: WO 2022/181041

(56) References cited:
- EP-A1- 2 412 484
- JP-A- 2011 093 071
- JP-A- 2012 006 138
- JP-A- H1 177 554
- JP-A- H1 177 554
- US-A1- 2013 192 860
- US-A1- 2013 192 860
- US-A1- 2019 283 222
- US-A1- 2019 283 222

## Description

### Technical Field

The present disclosure generally relates to an electric tool, and more particularly relates to an electric tool including a clutch mechanism.

### Background Art

Patent Literature 1 discloses an electric rotary tool (electric tool). The electric tool includes a motor unit (motor) and a control circuit section for controlling the motor unit. The control circuit section calculates fastening torque based on either a drive current for the motor unit as detected by a current detection means or the number of revolutions of the motor unit as detected by a number of revolutions detection means. When the fastening torque thus calculated becomes equal to or greater than preset fastening torque, the control circuit section stops running the motor unit.

In the electric tool of Patent Literature 1, it takes some time for the motor to stop running due to the inertial force of the motor. Thus, chances are that the electric tool fastens a fastening member such as a screw, a bolt, or a nut with fastening torque greater than preset fastening torque.

### Citation List

### Patent Literature

Patent Literature 1: JP 2009-202317 A
Document US 2013/192860 A1 describes a mode change mechanism for a power tool including an actuator with a permanent magnet. The actuator is moveable between a first position for a first mode of operation, and a second position for a second mode of operation. A first positioning member is adjacent the first position composed of a ferromagnetic material to attract the permanent magnet. A second positioning member is adjacent the second position and composed of a ferromagnetic material to attract the permanent magnet. An electromagnet may be energized to move the actuator between the first position and the second position. When the electromagnet is not energized, and the actuator is in the first position. the actuator is retained in the first position. When the electromagnet is not energized and the actuator is in the second position, the actuator is retained in the second position. When the electromagnet is energized, the actuator moves between the first and second positions.

Document JP H11 77554 A describes a torque control system comprising an operation shaft for revolving a screw fixture combined with the output shaft at one end of an electromagnetic clutch mechanism, wherein the other end of the electromagnetic clutch mechanism is fixed inside a holding part casing through a supporting body extended coaxially with the mechanism. A strain gauge is attached to one side surface of the supporting body and the electromagnetic clutch mechanism is configured to be engaged/disengaged based on the output signal of the strain gauge.

Document US 2019/283222 A1 describes a rotary power tool comprising a motor, an output shaft that receives torque from the motor, a clutch positioned between the motor and the output shaft for selectively engaging the output shaft to the motor, and a transducer for detecting an amount of torque transferred through the clutch to the output shaft. The clutch is capable of being actuated from a first mode in which the output shaft is engaged to the motor, to a second mode in which the output shaft is disengaged from the motor, in response to feedback from the transducer of the detected amount of torque transferred through the clutch.

Document EP 2 412 484 A1 describes a hand-held power tool having a tool body, a motor housed in the tool body and a grip part designed to be held by a user and performs a predetermined operation on a workpiece by a tool bit rotationally driven by the motor. The power tool includes a clutch that transmits torque and interrupts torque transmission between the motor and the tool bit, a non-contact torque sensor that detects torque acting on the tool bit in non-contact with a rotation axis rotating together with the tool bit, and a clutch control system that controls coupling and decoupling of the clutch according to a torque value detected by the non-contact torque sensor.

### Summary of Invention

An object of the present disclosure is to control an electric tool more accurately according to torque (fastening torque).

The claimed invention is defined by the features set forth in the appended independent claim. Additional embodiments of the claimed invention are defined by the dependent claims.

### Brief Description of Drawings

FIG. 1 is a schematic cross-sectional view of an electric tool according to an exemplary embodiment;
FIG. 2 is a circuit block diagram of the electric tool;
FIG. 3 is a cross-sectional view of a clutch mechanism included in the electric tool and exhibiting a transmitting state;
FIG. 4 is a cross-sectional view of the clutch mechanism included in the electric tool and exhibiting an interrupted state; and
FIG. 5 is a side view of a first rotating part of the electric tool.

### Description of Embodiments

An electric tool according to an exemplary embodiment will now be described with reference to the accompanying drawings. Note that the embodiment to be described below is only an exemplary one of various embodiments of the present disclosure and should not be construed as limiting.

The drawings to be referred to in the following description of embodiments are all schematic representations. Thus, the ratio of the dimensions (including thicknesses) of respective constituent elements illustrated on the drawings does not always reflect their actual dimensional ratio.

### (Embodiment)

### (Overview)

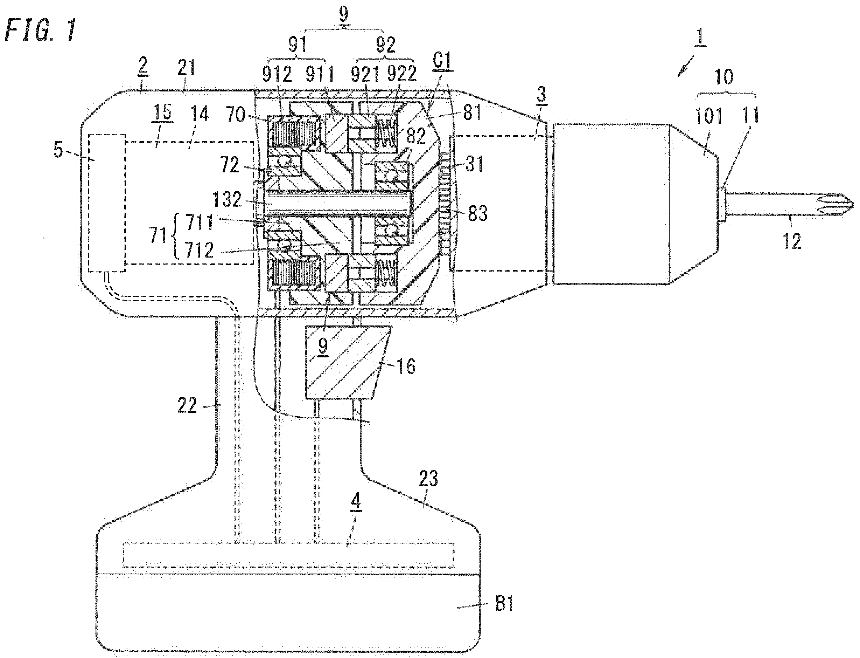

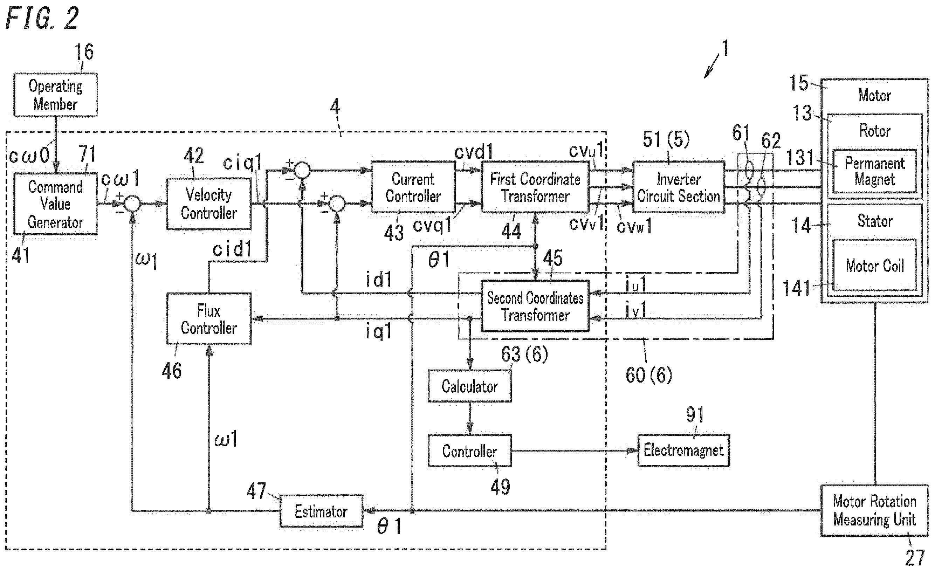

As shown in FIGS. 1 and 2, an electric tool 1 according to this embodiment includes a holder 11, a motor 15, a transmission mechanism 3, a torque detection unit 6, a clutch mechanism C1, and a controller 49. The holder 11 is configured to hold a tip tool 12 thereon. The transmission mechanism 3 transmits torque of the motor 15 to the holder 11. The torque detection unit 6 detects the torque transmitted from the motor 15 to the holder 11. The clutch mechanism C1 is switchable from a transmitting state where the torque of the motor 15 is transmitted to the holder 11 to an interrupted state where no torque of the motor 15 is transmitted to the holder 11, and vice versa. The controller 49 switches, when a predetermined condition about the torque detected by the torque detection unit 6 is satisfied, the clutch mechanism C1 from the transmitting state to the interrupted state. In this embodiment, the predetermined condition includes a condition that the torque detected by the torque detection unit 6 be greater than a threshold value.

According to this embodiment, the controller 49 switches the clutch mechanism C1 from the transmitting state to the interrupted state according to the torque detected by the torque detection unit 6. That is to say, the clutch mechanism C1 is switched from the transmitting state to the interrupted state by an electronic control performed by the controller 49.

In parallel with the control of switching the clutch mechanism C1 from the transmitting state to the interrupted state, the motor 15 is controlled to stop running. Nevertheless, the motor 15 continues to run for a while due to inertial energy. In the interrupted state, the motor 15 is cut off from both the holder 11 and the tip tool 12 held by the holder 11, thus reducing the chances of the holder 11 and the tip tool 12 continuing to turn due to the inertial energy of the motor 15.

A clutch mechanism for making a switch from the transmitting state to the interrupted state by mechanical action using torque, not by electronic control, is called a "mechanical clutch." According to the mechanical clutch, a switch is made from the transmitting state to the interrupted state if the torque is greater than a threshold value. Nevertheless, according to the mechanical clutch, the switch is made to the interrupted state with reliability if the torque is sufficiently greater than the threshold value, but the switch to the interrupted state may fail to be made the instant the torque reaches the threshold value.

In contrast, the electric tool 1 according to this embodiment switches the clutch mechanism C1 to the interrupted state by electronic control based on the torque detected by the torque detection unit 6, thus allowing the clutch mechanism C1 to be switched quickly to the interrupted state. Switching the clutch mechanism C1 to the interrupted state reduces the rotation of the holder 11 and the tip tool 12. As can be seen, the electric tool 1 according to this embodiment improves the accuracy of rotational control of the holder 11 and the tip tool 12 based on the torque. This reduces the chances of a fastening member such as a screw, a bolt, or a nut being fastened with excessive torque.

The clutch mechanism C1 according to this embodiment includes an electromagnet 91 and switches between the transmitting state and the interrupted state by changing the energization state of the electromagnet 91. Nevertheless, not covered by the invention the clutch mechanism C1 does not have to have such a configuration including the electromagnet 91. Alternatively, the clutch mechanism C1 may also be a mechanical clutch for use with an actuator. In that case, the actuator may drive the mechanical clutch under the electronic control by the controller 49 to switch the mechanical clutch from the transmitting state to the interrupted state. The electric tool 1 may further include such an actuator. The actuator may include, for example, a cylinder which stretches and shrinks under the control of the controller 49.

### (Details)

### (1) Overall configuration

A configuration for the electric tool 1 will now be described in further detail. In the following description of embodiments, the direction in which the motor 15 and the transmission mechanism 3 are arranged side by side will be defined as a "rightward/leftward direction," the transmission mechanism 3 is regarded as being located on the right of the motor 15, and the motor 15 is regarded as being located on the left of the transmission mechanism 3. Note that these definitions should not be construed as specifying the direction in which the electric tool 1 should be used.

The electric tool 1 may be used as, for example, an electric screwdriver, drill, drill-screwdriver, or wrench. Alternatively, the electric tool 1 may also be used as an electric saw, plane, nibbler, hole saw, or grinder, for example. In the following description of exemplary embodiments, a situation where the electric tool 1 is used as a screwdriver for tightening a fastening member such as a screw, a bolt or a nut will be described as a typical example.

As shown in FIG. 1, the electric tool 1 includes a housing 2, a motor 15, a power supply unit B1, an operating member 16, a power control block 4, a driver circuit section 5, the clutch mechanism C1, the transmission mechanism 3, a chuck 10, and a tip tool 12.

### (2) Housing

The housing 2 includes a barrel 21, a grip 22, and an attachment 23. The barrel 21 has a cylindrical shape. The grip 22 protrudes from a side surface of the barrel 21. The grip 22 also has a cylindrical shape. The attachment 23 is provided at the tip of the grip 22. In other words, the barrel 21 and the attachment 23 are coupled to each other via the grip 22. The power supply unit B1 is attached removably to the attachment 23.

In the barrel 21, housed are the driver circuit section 5, the motor 15, the clutch mechanism C1, and the transmission mechanism 3. The grip 22 holds the operating member 16. The power control block 4 is housed in the attachment 23.

### (3) Chuck

As shown in FIG. 1, the chuck 10 includes an outer shell 101 and the holder 11.

The outer shell 101 has a circular columnar shape. The outer shell 101 is attached to the tip of the barrel 21. Inside the outer shell 101, the holder 11 is disposed. The outer shell 101 holds the holder 11 rotatably.

The holder 11 has a circular cylindrical shape. The holder 11 is mounted on the output shaft of the transmission mechanism 3. The holder 11 rotates with the torque transmitted from the motor 15 via the transmission mechanism 3. The tip tool 12 is attached removably to the holder 11. The tip tool 12 rotates along with the holder 11. The electric tool 1 rotates the tip tool 12 by turning the holder 11 with the torque of the motor 15.

### (4) Tip tool

The tip tool 12 (also called a "bit") may be a screwdriver bit or a drill bit, for example. One of various types of tip tools 12 is selected depending on the intended use and attached to the holder 11 for the intended use.

In this embodiment, the tip tool 12 is replaceable depending on the intended use. However, the tip tool 12 does not have to be replaceable. Alternatively, the electric tool 1 may also be an electric tool system designed to allow the use of only a particular type of tip tool 12, for example.

### (5) Transmission mechanism

As shown in FIG. 1, the transmission mechanism 3 is interposed between the holder 11 and the motor 15. The transmission mechanism 3 includes a plurality of gears. The transmission mechanism 3 transmits the torque of the motor 15 to the holder 11. More specifically, the transmission mechanism 3 receives the torque of the motor 15 via the clutch mechanism C1 and transmits the torque to the holder 11. The transmission mechanism 3 reduces the rotational velocity of the motor 15. More specifically, the transmission mechanism 3 reduces the rotational velocity of the motor 15 at a predetermined speed reduction ratio and outputs rotational force with the rotational velocity thus reduced. That is to say, the rotational velocity of the output shaft of the transmission mechanism 3 is lower than the rotational velocity of the input shaft.

The plurality of gears of the transmission mechanism 3 includes a gear 31. The gear 31 meshes with a gear 83 (to be described later) provided for the clutch mechanism C1. In this manner, the transmission mechanism 3 receives the torque from the clutch mechanism C1.

### (6) Motor

The motor 15 may be a brushless motor, for example. In particular, the motor 15 according to this embodiment is a synchronous motor. More specifically, the motor 15 may be a permanent magnet synchronous motor (PMSM). As shown in FIG. 2, the motor 15 includes a rotor 13 having a permanent magnet 131 and a stator 14 having a motor coil 141. The rotor 13 further includes a rotary shaft 132 (refer to FIG. 1) that outputs torque. The rotor 13 rotates with respect to the stator 14 due to electromagnetic interaction between the motor coil 141 and the permanent magnet 131.

### (7) Clutch mechanism

As shown in FIG. 1, the clutch mechanism C1 is interposed between the holder 11 and the motor 15. More specifically, the clutch mechanism C1 is interposed between the motor 15 and the transmission mechanism 3. While the clutch mechanism C1 is in the transmitting state, the clutch mechanism C1 transmits the torque of the motor 15 to the transmission mechanism 3. As a result, the torque of the motor 15 is transmitted to the holder 11 via the clutch mechanism C1 and the transmission mechanism 3. On the other hand, while the clutch mechanism C1 is in the interrupted state, the clutch mechanism C1 does not transmit the torque of the motor 15 to the transmission mechanism 3. As a result, the torque of the motor 15 is not transmitted to the holder 11.

The clutch mechanism C1 includes a first rotating part 71, a second rotating part 81, and at least one (e.g., two in the example illustrated in FIG. 1) coupling portion 9. The first rotating part 71 rotates as the motor 15 runs. The holder 11 is coupled either directly or indirectly to the second rotating part 81. In this embodiment, the holder 11 is coupled indirectly to the second rotating part 81 via the transmission mechanism 3.

The transmitting state of the clutch mechanism C1 is a state where the first rotating part 71 and the second rotating part 81 are coupled to each other via the at least one coupling portion 9 so that the torque of the first rotating part 71 is transmitted to the second rotating part 81. The interrupted state of the clutch mechanism C1 is a state where the first rotating part 71 and the second rotating part 81 are decoupled from each other so that the torque of the first rotating part 71 is not transmitted to the second rotating part 81.

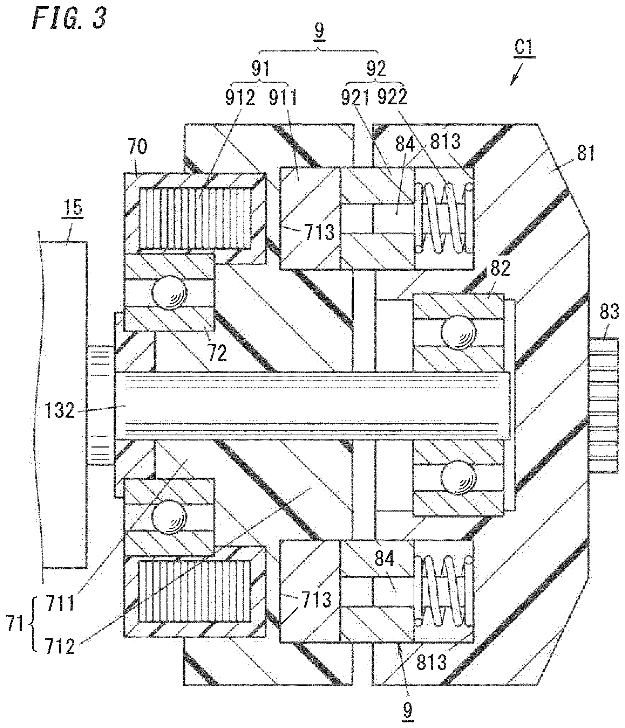

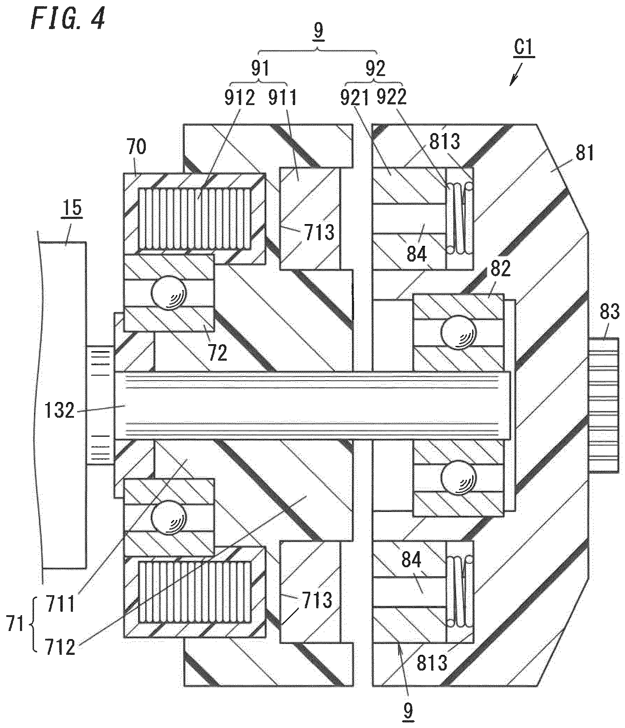

As shown in FIGS. 3 and 4, the clutch mechanism C1 further includes a stator part 70, a first bearing 72, and a second bearing 82.

The stator part 70 is fixed to the housing 2. The stator part 70 has a cylindrical shape. The first bearing 72 is fixed onto an inner surface of the stator part 70.

The first rotating part 71 is held by the first bearing 72. This allows the first rotating part 71 to rotate freely with respect to the stator part 70. The first rotating part 71 is coupled to the rotary shaft 132 of the motor 15. This causes the first rotating part 71 to rotate as the motor 15 turns. The rotary shaft 132 is arranged to be aligned with the center axis of the first rotating part 71.

The first rotating part 71 includes a cylindrical member 711 and a facing member 712. The cylindrical member 711 has a circular cylindrical shape. The facing member 712 is connected to the tip of the cylindrical member 711. The facing member 712 has a disklike shape. The facing member 712 faces the second rotating part 81. The facing member 712 has a plurality of (e.g., two in the example illustrated in FIG. 3) first recesses 713 on a surface thereof facing the second rotating part 81.

The second rotating part 81 is disposed on the right of the first rotating part 71. The second rotating part 81 is interposed between the first rotating part 71 and the transmission mechanism 3. The first rotating part 71 is interposed between the motor 15 and the second rotating part 81.

The second rotating part 81 has a disklike shape. The second rotating part 81 has a plurality of (e.g., two in the example illustrated in FIG. 3) second recesses 813 on a surface thereof facing the first rotating part 71.

The second bearing 82 is fixed to the second rotating part 81. The second bearing 82 holds the rotary shaft 132 of the motor 15. While the clutch mechanism C1 is in the interrupted state, the rotary shaft 132 rotates with respect to the second rotating part 81. On the other hand, while the clutch mechanism C1 is in the transmitting state, the second rotating part 81 rotates at the same number of revolutions as the rotary shaft 132.

The clutch mechanism C1 further includes a gear 83. The gear 83 is formed integrally with the second rotating part 81. The gear 83 is provided for the other surface, opposite from the first rotating part 71, of the second rotating part 81. The gear 83 meshes with a gear 31 (refer to FIG. 1) of the transmission mechanism 3, thus transmitting the torque of the second rotating part 81 to the transmission mechanism 3.

The first rotating part 71 and the second rotating part 81 face each other. Specifically, the first rotating part 71 and the second rotating part 81 face each other with a narrow gap left between themselves. Alternatively, the first rotating part 71 and the second rotating part 81 may be in contact with each other at least in some region. Optionally, the electric tool 1 may further include a spacer. In that case, the spacer may be fixed to either the first rotating part 71 or the second rotating part 81 and sandwiched between the first rotating part 71 and the second rotating part 81.

The rotary shaft 132 of the motor 15 may be used as an input shaft of the clutch mechanism C1. That is to say, the rotary shaft 132 serves as not only a constituent element of the motor 15 but also a constituent element of the clutch mechanism C1. The rotary shaft 132 transmits the torque of the motor 15 to the first rotating part 71.

The gear 83 is used as an output shaft of the clutch mechanism C1. The gear 83 transmits the rotational force of the second rotating part 81 to the holder 11. More specifically, the gear 83 transmits the rotational force of the second rotating part 81 to the holder 11 via the transmission mechanism 3.

The gear 83 (output shaft) is arranged coaxially with the rotary shaft 132 (input shaft). This reduces the axial runout of the input shaft and the output shaft.

The plurality of first recesses 713 provided for the first rotating part 71 correspond one to one to the plurality of second recesses 813 provided for the second rotating part 81. While the clutch mechanism C1 is in the transmitting state, a pair of first and second recesses 713, 813 corresponding to each other face each other.

Each of the plurality of coupling portions 9 includes the electromagnet 91 and a permanent magnet block 92. The electromagnet 91 includes a magnetic pole 911 and a coil 912. The permanent magnet block 92 includes a permanent magnet 921 and an elastic member 922.

That is to say, the coupling portion 9 includes the electromagnet 91 and the permanent magnet 921, and the electromagnet 91 includes the magnetic pole 911. The magnetic pole 911 is made of a magnetic material such as iron (e.g., electromagnetic soft iron). The permanent magnet 921 faces the magnetic pole 911.

The magnetic pole 911 is held by the first rotating part 71. The permanent magnet 921 is held by the second rotating part 81. The controller 49 (refer to FIG. 2) switches the clutch mechanism C1 from the transmitting state to the interrupted state, or vice versa, by changing the energization state of the electromagnet 91. That is to say, electromagnetic force acting between the magnetic pole 911 and the permanent magnet 921 changes according to the energization state of the coil 912 of the electromagnet 91, and the clutch mechanism C1 switches between the transmitting state and the interrupted state accordingly.

More specifically, while the controller 49 is performing control such that the magnitude of a current supplied to the coil 912 becomes equal to or greater than a predetermined magnitude, electromagnetic repulsive force is generated between the magnetic pole 911 and the permanent magnet 921, thus producing the interrupted state where the first rotating part 71 and the second rotating part 81 are decoupled from each other. That is to say, the controller 49 switches the clutch mechanism C1 from the transmitting state to the interrupted state by generating the electromagnetic repulsive force between the magnetic pole 911 and the permanent magnet 921.

On the other hand, while the controller 49 keeps the coil 912 not energized or if the magnitude of the current supplied to the coil 912 is less than the predetermined magnitude, the electromagnetic repulsive force is relatively small. Thus, the transmitting state where the torque of the first rotating part 71 is transmitted to the second rotating part 81 is maintained.

As can be seen, the clutch mechanism C1 turns into the interrupted state while the electromagnet 91 (coil 912) is energized with a current, of which the magnitude is equal to or greater than the predetermined magnitude. The clutch mechanism C1 turns into the transmitting state while the electromagnet 91 (coil 912) is not energized or if the electromagnet 91 (coil 912) is energized with a current, of which the magnitude is less than the predetermined magnitude.

The plurality of magnetic poles 911 of the plurality of electromagnets 91 correspond one to one to the plurality of first recesses 713 of the first rotating part 71. Each magnetic pole 911 is inserted into a corresponding one of the first recesses 713. The plurality of coils 912 of the plurality of electromagnets 91 are fixed to the stator part 70. The plurality of coils 912 are arranged on the left of a region where the plurality of magnetic poles 911 are arranged.

The plurality of permanent magnet blocks 92 correspond one to one to the plurality of second recesses 813 of the second rotating part 81. The permanent magnet 921 and elastic member 922 of each permanent magnet block 92 are inserted into a corresponding one of the second recesses 813. The permanent magnet 921 has a cylindrical shape. The second rotating part 81 has shaft portions 84, each of which protrudes from the bottom surface of a corresponding one of the second recesses 813 and is inserted into a corresponding one of the permanent magnets 921. The permanent magnet 921 is movable along the shaft portion 84.

The elastic member 922 is disposed on the right of the permanent magnet 921. The elastic member 922 is interposed between the bottom of the second recess 813 and the permanent magnet 921. The elastic member 922 is a compressed spring. More specifically, the elastic member 922 may be a compressed coil spring. The elastic member 922 is arranged to surround the shaft portion 84. The elastic member 922 applies leftward force to the permanent magnet 921. That is to say, the elastic member 922 applies force that biases the permanent magnet 921 toward the first rotating part 71.

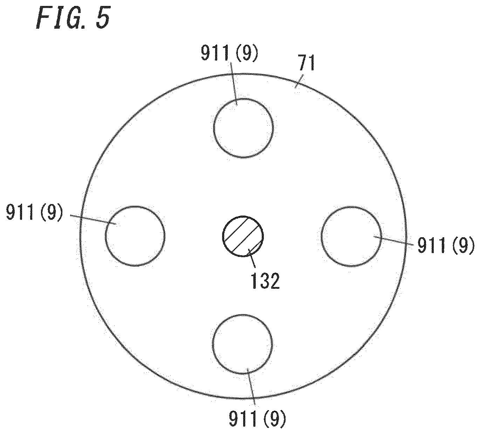

The plurality of coupling portions 9 are arranged to surround at least one of the rotary shaft 132 (input shaft) or the gear 83 (output shaft). FIG. 5 illustrates the first rotating part 71 as viewed from the right. The plurality of magnetic poles 911 of the plurality of coupling portions 9 are arranged in a circle to surround the rotary shaft 132. In the same way, the plurality of coils 912 (refer to FIG. 3) are also arranged in a circle to surround the rotary shaft 132. Note that if the plurality of coupling portions 9 surrounds at least one of the rotary shaft 132 (input shaft) or the gear 83 (output shaft), then the number of the coupling portions 9 provided may be equal to or greater than three.

The plurality of permanent magnet blocks 92 are also arranged in a circle to surround the rotary shaft 132. In addition, when viewed in the rightward/leftward direction, the plurality of permanent magnet blocks 92 are arranged in a circle to surround the gear 83.

Next, it will be described how the clutch mechanism C1 operates.

While the coil 912 is not energized or energized with a current, of which the magnitude is smaller than a predetermined magnitude, the clutch mechanism C1 maintains the transmitting state. While the clutch mechanism C1 is in the transmitting state, the permanent magnets 921 are inserted into the first recesses 713 of the first rotating part 71 as shown in FIG. 3. At this time, each permanent magnet 921 is in contact with a corresponding one of the magnetic poles 911. More specifically, the permanent magnet 921 is sandwiched between the magnetic pole 911 and a corresponding one of the elastic members 922. The elastic energy applied by the elastic member 922 holds the permanent magnet 921 at the same position. Inserting the permanent magnet 921 into the first recess 713 in each of the plurality of coupling portions 9 couples the first rotating part 71 and the second rotating part 81 to each other. Thus, while the clutch mechanism C1 is in the transmitting state, the first rotating part 71 and the second rotating part 81 rotate at the same number of revolutions.

In this manner, the permanent magnets 921 are fitted into the first recesses 713. That is to say, the clutch mechanism C1 has a fitting structure, which is formed by the first recesses 713 and the permanent magnets 921. While the clutch mechanism C1 is in the transmitting state, the fitting structure couples the first rotating part 71 and the second rotating part 81 to each other by fitting.

If the coils 912 are energized with a current, of which the magnitude is equal to or greater than a predetermined magnitude, while the clutch mechanism C1 is in the transmitting state, electromagnetic repulsive force is generated between the magnetic poles 911 and the permanent magnets 921, thus causing the permanent magnets 921 to move to the right. That is to say, the permanent magnets 921 come out of contact with the magnetic poles 911 while compressing the elastic members 922 to move out of the first recesses 713 of the first rotating part 71 as shown in FIG. 4. More specifically, the permanent magnets 921 are retracted into the second recesses 813 of the second rotating part 81. Moving the permanent magnet 921 out of the first recess 713 in each of the coupling portions 9 decouples the first rotating part 71 and the second rotating part 81 from each other. That is to say, the clutch mechanism C1 turns into the interrupted state.

While the clutch mechanism C1 is in the interrupted state, as the rotary shaft 132 of the motor 15 turns, only the first rotating part 71 rotates with the second rotating part 81 not rotating. In addition, the holder 11 and the tip tool 12 that are coupled to the second rotating part 81 via the transmission mechanism 3 do not rotate, either. More specifically, as the clutch mechanism C1 switches from the transmitting state to the interrupted state, the second rotating part 81, the plurality of gears of the transmission mechanism 3, the holder 11, and the tip tool 12 continue to rotate for a while due to the inertial energy but will soon stop rotating when the inertial energy is lost.

As can be seen from the foregoing description, each of the plurality of coupling portions 9 further includes the elastic member 922 that stores elastic energy while the electromagnet 91 is being energized. That is to say, letting the permanent magnet 921 compress the elastic member 922 causes the elastic member 922 to store elastic energy. The clutch mechanism C1 is caused to switch to either the transmitting state or the interrupted state by the elastic energy of the elastic member 922. In this embodiment, the clutch mechanism C1 is caused to switch from the interrupted state to the transmitting state by the elastic energy of the elastic member 922. That is to say, adjusting the respective rotational angles of the first rotating part 71 and the second rotating part 81 such that the respective permanent magnets 921 face the magnetic poles 911 causes the permanent magnets 921 to be moved by the elastic energy of the elastic members 922 to be inserted into the first recesses 713. This means that the clutch mechanism C1 has switched from the interrupted state to the transmitting state.

Optionally, the respective rotational angles of the first rotating part 71 and the second rotating part 81 may also be adjusted by, for example, letting the user operate an operating part coupled to either the first rotating part 71 or the second rotating part 81. Alternatively, the rotational angles may also be adjusted by letting the user activate a driving mechanism for rotating either the first rotating part 71 or the second rotating part 81 using a power source such as electrical energy. In that case, the rotational velocity of either the first rotating part 71 or the second rotating part 81 driven by the driving mechanism is lower than the rotational velocity of the motor 15.

### (8) Power supply unit

The power supply unit B1 shown in FIG. 1 supplies a current to the motor 15, the electromagnets 91, and the power control block 4, for example. The power supply unit B1 may be a battery pack, for example. The power supply unit B1 may include, for example, either a single secondary battery or a plurality of secondary batteries.

### (9) Operating member

The operating member 16 accepts the operation of controlling the rotation of the motor 15. The motor 15 may be selectively activated (turned ON or OFF) by the operation of pulling the operating member 16. In addition, the rotational velocity of the motor 15 is adjustable depending on the manipulative variable of the operation of pulling the operating member 16 (i.e., depending on how deep the operating member 16 is pulled). As a result, the rotational velocity of the holder 11 is adjustable depending on the manipulative variable of the operation of pulling the operating member 16. The greater the manipulative variable is, the higher the rotational velocity of the motor 15 becomes. The power control block 4 either starts or stops rotating the motor 15, and controls the rotational velocity of the motor 15, depending on the manipulative variable of the operation of pulling the operating member 16.

### (10) Driver circuit section

As shown in FIG. 1, the driver circuit section 5 is disposed adjacent to the motor 15. The driver circuit section 5 supplies power to the motor 15 under the control of the power control block 4. The driver circuit section 5 includes an inverter circuit section 51 (refer to FIG. 2). The inverter circuit section 51 converts the power supplied from the power supply unit B1 into power with a desired voltage and supplies the power thus converted to the motor 15.

### (11) Motor rotation measuring unit

The electric tool 1 further includes a motor rotation measuring unit 27 (refer to FIG. 2). The motor rotation measuring unit 27 measures the rotational angle of (the rotor 13 of) the motor 15. As the motor rotation measuring unit 27, a photoelectric encoder or a magnetic encoder may be adopted, for example.

### (12) Power control block

As shown in FIG. 2, the power control block 4 is used along with the inverter circuit section 51 and controls the operation of the motor 15 by feedback control.

The power control block 4 includes a computer system including one or more processors and a memory. At least some of the functions of the power control block 4 are performed by making the processor(s) of the computer system execute a program stored in the memory of the computer system. The program may be stored in the memory. The program may also be downloaded via a telecommunications line such as the Internet or distributed after having been stored in a non-transitory storage medium such as a memory card.

The power control block 4 includes a command value generator 41, a velocity controller 42, a current controller 43, a first coordinate transformer 44, a second coordinate transformer 45, a flux controller 46, an estimator 47, a controller 49, and a calculator 63. Note that these constituent elements of the power control block 4 just represent functions to be performed by the power control block 4 and do not always have a substantive configuration.

The electric tool 1 further includes a plurality of (e.g., two in the example illustrated in FIG. 2) current sensors 61, 62. Each of the plurality of current sensors 61, 62 includes, for example, a hall element current sensor or a shunt resistor element. The plurality of current sensors 61, 62 measure an electric current supplied from the power supply unit B1 (refer to FIG. 1) to the motor 15 via the inverter circuit section 51. In this embodiment, three-phase currents (namely, a U-phase current, a V-phase current, and a W-phase current) are supplied to the motor 15. The plurality of current sensors 61, 62 measure currents in at least two phases. In FIG. 2, the current sensor 61 measures the U-phase current to output a current measured value iᵤ1 and the current sensor 62 measures the V-phase current to output a current measured value iᵥ1.

The estimator 47 obtains a time derivative of the rotational angle θ1, measured by the motor rotation measuring unit 27, of the motor 15 to calculate an angular velocity ω1 of the motor 15.

The torque detection unit 6 includes a current measuring unit 60 and the calculator 63. The current measuring unit 60 is made up of the two current sensors 61, 62 and the second coordinate transformer 45. The current measuring unit 60 acquires a d-axis current (excitation current) and a q-axis current (torque current), both of which are to be supplied to the motor 15. That is to say, the current measured value id1 of the d-axis current and the current measured value iq1 of the q-axis current are calculated by having two-phase currents measured by the two current sensors 61, 62 transformed by the second coordinate transformer 45.

The second coordinate transformer 45 performs, based on the rotational angle θ1, measured by the motor rotation measuring unit 27, of the motor 15, coordinate transformation on the current measured values iᵤ1, iᵥ1 measured by the plurality of current sensors 61, 62, thereby calculating current measured values id1, iq1. That is to say, the second coordinate transformer 45 transforms the current measured values iᵤ1, iᵥ1, corresponding to currents in two phases, into a current measured value id1 corresponding to a magnetic field component (d-axis current) and a current measured value iq1 corresponding to a torque component (q-axis current).

The calculator 63 calculates, based on the torque current (current measured value iq1) measured by the current measuring unit 60, the torque to be transmitted from the motor 15 to the holder 11. The calculator 63 calculates the torque to be transmitted from the motor 15 to the holder 11 by, for example, multiplying the current measured value iq1 representing the torque current by a predetermined constant.

As used herein, the torque to be transmitted from the motor 15 to the holder 11 may be the torque of the motor 15, the torque of the holder 11, or the torque of a constituent element (which may be the clutch mechanism C1 or the transmission mechanism 3) for transmitting the torque of the motor 15 to the holder 11.

The controller 49 switches the energization state of the coil 912 (refer to FIG. 1) of the electromagnet 91. This allows the controller 49 to switch the clutch mechanism C1 from the transmitting state to the interrupted state.

The controller 49 switches the clutch mechanism C1 from the transmitting state to the interrupted state when a predetermined condition about the torque detected by the torque detection unit 6 (hereinafter referred to as "detected torque") is satisfied. In addition, the controller 49 causes the motor 15 to stop running when the predetermined condition is satisfied. The predetermined condition may include a condition that the detected torque be greater than a threshold value.

The predetermined condition may be, for example, a condition that the detected torque be greater than the threshold value. Alternatively, the predetermined condition may also be, for example, a condition that the detected torque remain greater than the threshold value for at least a predetermined time. Still alternatively, the torque detection unit 6 may detect the torque at predetermined time intervals and the predetermined condition may also be, for example, a condition that the detected torque be greater than the threshold value at least a predetermined number of times.

The controller 49 does not perform the control of switching the clutch mechanism C1 from the interrupted state to the transmitting state while the clutch mechanism C1 is in the interrupted state and the motor 15 is running. That is to say, while the motor 15 is running after the clutch mechanism C1 has turned into the interrupted state, the controller 49 maintains a state where the coil 912 is energized with a current, of which the magnitude is equal to or greater than a predetermined magnitude. This enables maintaining the interrupted state and preventing the tip tool 12 from rotating until the motor 15 stops running.

The command value generator 41 generates a command value cω1 for the angular velocity of the motor 15. The command value generator 41 receives, from the operating member 16, for example, a command value cω0 corresponding to the manipulative variable of the operation of pulling the operating member 16. The command value generator 41 generate a command value cω1 corresponding to the command value cω0 That is to say, as the manipulative variable increases, the command value generator 41 increases the command value cω1 of the angular velocity accordingly.

The velocity controller 42 generates a command value ciq1 based on the difference between the command value cω1 generated by the command value generator 41 and the angular velocity ω1 calculated by the estimator 47. The command value ciq1 is a command value specifying the magnitude of a torque current (q-axis current) of the motor 15. The power control block 4 performs control to bring the torque current (q-axis current) to be supplied to the motor coil 141 closer toward the command value ciq1. The velocity controller 42 determines the command value ciq1 such that the difference between the command value cω1 and the angular velocity ω1 becomes less than a predetermined value.

The flux controller 46 generates a command value cid1 based on the angular velocity ω1 calculated by the estimator 47 and the current measured value iq1. The command value cid1 is a command value that specifies the magnitude of the excitation current (d-axis current) of the motor 15. That is to say, the power control block 4 controls the operation of the motor 15 to bring the excitation current (d-axis current) to be supplied to the motor coil 141 closer toward the command value cid1.

In this embodiment, the command value cid1 generated by the flux controller 46 may be, for example, a command value to set the magnitude of the excitation current at zero. The flux controller 46 may generate the command value cid1 to set the magnitude of the excitation current at zero constantly or may generate the command value cid1 to set the magnitude of the excitation current at a value greater or smaller than zero only as needed. When the command value cid1 of the excitation current becomes smaller than zero, a negative excitation current (i.e., a flux-weakening current) flows through the motor 15, thus weakening the magnetic flux that drives the rotor 13.

The current controller 43 generates a command value cvd1 based on the difference between the command value cid1 generated by the flux controller 46 and the current measured value id1 calculated by the second coordinate transformer 45. The command value cvd1 is a command value that specifies the magnitude of d-axis voltage of the motor 15. The current controller 43 determines the command value cvd1 to make the difference between the command value cid1 and the current measured value id1 less than a predetermined value.

In addition, the current controller 43 also generates a command value cvq1 based on the difference between the command value ciq1 generated by the velocity controller 42 and the current measured value iq1 calculated by the second coordinate transformer 45. The command value cvq1 is a command value that specifies the magnitude of q-axis voltage of the motor 15. The current controller 43 generates the command value cvq1 to make the difference between the command value ciq1 and the current measured value iq1 less than a predetermined value.

The first coordinate transformer 44 performs coordinate transformation on the command values cvd1, cvq1 based on the rotational angle θ1, measured by the motor rotation measuring unit 27, of the motor 15 to calculate command values cvᵤ1, cvᵥ1, cv_{w}1. Specifically, the first coordinate transformer 44 transforms the command value cvd1 for a magnetic field component (d-axis voltage) and the command value cvq1 for a torque component (q-axis voltage) into command values cvᵤ1, cvᵥ1, cv_{w}1 corresponding to voltages in three phases. The command value cvᵤ1 corresponds to a U-phase voltage, the command value cvᵥ1 corresponds to a V-phase voltage, and the command value cv_{w}1 corresponds to a W-phase voltage.

The inverter circuit section 51 supplies voltages in three phases, corresponding to the command values cvᵤ1, cvᵥ1, cv_{w}1, respectively, to the motor 15. The inverter circuit section 51 controls the power to be supplied to the motor 15 by performing pulse width modulation (PWM) control, for example.

The motor 15 is driven with the power (voltages in three phases) supplied from the inverter circuit section 51, thereby generating torque.

As a result, the power control block 4 controls the excitation current flowing through the motor coil 141 such that the excitation current comes to have a magnitude corresponding to the command value cid1 generated by the flux controller 46. In addition, the power control block 4 also controls the angular velocity of the motor 15 such that the angular velocity of the motor 15 becomes an angular velocity corresponding to the command value cω1 generated by the command value generator 41.

The power to be supplied to the motor 15 is controlled by the power control block 4 using vector control. The vector control is a type of motor control technique by which the current to be supplied to the motor coil 141 is broken down into a current component (excitation current) that generates a magnetic flux and a current component that generates torque (torque current) and these current components are controlled independently of each other.

The current measured value iq1 for the torque current is used to perform the vector control and to calculate the torque to be transmitted from the motor 15 to the holder 11. This allows a part of a circuit for performing the vector control and a part of a circuit for calculating the torque to be shared. This contributes to reducing the areas and dimensions of the circuits provided for the electric tool 1 and cutting down the cost required for the circuits.

### (Variations of embodiment)

Next, variations of the exemplary embodiment will be enumerated one after another. Note that the variations to be described below may be adopted in combination as appropriate.

The tip tool 12 does not have to be one of the constituent elements of the electric tool 1.

The power supply unit B1 does not have to be one of the constituent elements of the electric tool 1.

The elastic member 922 may also be a tensile spring (such as a tensile coil spring). In that case, the controller 49 maintains the clutch mechanism C1 in the transmitting state by generating electromagnetic suction force between the magnetic poles 911 and the permanent magnets 921. When the controller 49 either reduces or removes the electromagnetic suction force, the elastic energy of the tensile spring causes the permanent magnets 921 to move out of the first recesses 713, thus switching the clutch mechanism C1 from the transmitting state to the interrupted state.

In the exemplary embodiment described above, the first rotating part 71 and the second rotating part 81 are coupled to each other to rotate at the same number of revolutions by inserting the permanent magnets 921 into the first recesses 713 of the first rotating part 71. However, the permanent magnets 921 do not have to be inserted into the first recesses 713. Alternatively, the first rotating part 71 and the second rotating part 81 may also be coupled to each other only with the magnetic suction force acting between the permanent magnets 921 and the magnetic poles 911.

The holder 11 may be formed integrally with a part of the transmission mechanism 3.

The first rotating part 71 may form an integral part of the rotor 13 of the motor 15.

In the exemplary embodiment described above, the fitting structure for coupling the first rotating part 71 and the second rotating part 81 to each other by fitting is formed by the first recesses 713 and the permanent magnets 921. However, this is only an example and should not be construed as limiting. According to a first alternative example, the fitting structure may also be formed by recesses (which are either the first recesses 713 or other recesses) provided for the first rotating part 71 and projections provided for the second rotating part 81. According to a second alternative example, the fitting structure may also be formed by recesses (which are either the second recesses 813 or other recesses) provided for the second rotating part 81 and projections provided for the first rotating part 71. According to the first or second alternative example, the recesses and the projections only need to be fitted into each other by changing the relative positions of the first rotating part 71 and the second rotating part 81 with the electromagnetic force acting between the electromagnets 91 and the permanent magnets 921.

The clutch mechanism C1 does not have to be arranged as described for the exemplary embodiment. Alternatively, the clutch mechanism C1 may also be interposed, for example, between the transmission mechanism 3 and the holder 11.

The torque detection unit 6 may be a torque sensor. As the torque sensor, a resistive strain sensor or a magnetostrictive strain sensor may be used, for example.

### (Recapitulation)

The exemplary embodiment and its variations described above are specific implementations of the following aspects of the present disclosure.

An electric tool (1) according to the claimed invention is defined by the features set forth in the appended independent claim.

According to this configuration, the controller (49) switches the clutch mechanism (C1) to the interrupted state according to the torque detected by the torque detection unit (6). This improves the accuracy of control according to the torque, compared to switching the clutch mechanism (C1) to the interrupted state by mechanical action according to the torque, not by electronic control by the controller (49).

In an electric tool (1) according to a second aspect, which may be implemented in conjunction with the claimed invention, the predetermined condition includes a condition that the torque detected by the torque detection unit (6) be greater than a threshold value.

This configuration may reduce the chances of a fastening member being fastened with excessive torque, of which the magnitude is greater than a threshold value.

In an electric tool (1) according to a third aspect, which may be implemented in conjunction with the claimed invention or second aspect, the torque detection unit (6) includes a current measuring unit (60) and a calculator (63). The current measuring unit (60) measures a torque current flowing through the motor (15). The calculator (63) calculates, based on the torque current measured by the current measuring unit (60), the torque transmitted from the motor (15) to the holder (11).

This configuration allows the torque to be calculated based on the torque current.

In an electric tool (1) according to a fourth aspect, which may be implemented in conjunction with the claimed invention or any one of the second to third aspects, the controller (49) suspends, while the clutch mechanism (C1) is in the interrupted state and the motor (15) is running, performing control of switching the clutch mechanism (C1) from the interrupted state to the transmitting state.

This configuration may prevent the tip tool (12) from rotating by maintaining the interrupted state until the motor (15) stops running.

In an electric tool (1) according to a fifth aspect, which may be implemented in conjunction with the claimed invention or any one of the second to fourth aspects, the transmission mechanism (3) reduces a rotational velocity of the motor (15). The clutch mechanism (C1) is interposed between the motor (15) and the transmission mechanism (3).

The transmission mechanism (3) reduces the rotational velocity of the motor (15), and therefore, the torque of the motor (15) is less than the torque of the transmission mechanism (3). Thus, this configuration may reduce the load on the clutch mechanism (C1) while the clutch mechanism (C1) is in the transmitting state, compared to a situation where the clutch mechanism (C1) is interposed between the transmission mechanism (3) and the holder (11).

In an electric tool (1) according to the claimed invention the clutch mechanism (C1) includes a first rotating part (71), a second rotating part (81), and at least one coupling portion (9). The first rotating part (71) rotates as the motor (15) runs. The holder (11) is coupled either directly or indirectly to the second rotating part (81). The transmitting state is a state where the first rotating part (71) and the second rotating part (81) are coupled to each other via the at least one coupling portion (9) so that torque of the first rotating part (71) is transmitted to the second rotating part (81). The interrupted state is a state where the first rotating part (71) and the second rotating part (81) are decoupled from each other so that no torque of the first rotating part (71) is transmitted to the second rotating part (81).

This configuration allows the clutch mechanism (C1) to selectively transmit or interrupt the torque.

In an electric tool (1) according to the invention, the at least one coupling portion (9) includes: an electromagnet (91) having a magnetic pole (911); and a permanent magnet (921) facing the magnetic pole (911). The magnetic pole (911) is held by the first rotating part (71). The permanent magnet (921) is held by the second rotating part (81). The controller (49) switches the clutch mechanism (C1) from the transmitting state to the interrupted state, or vice versa, by changing an energization state of the electromagnet (91).

This configuration enables switching the clutch mechanism (C1) from the transmitting state to the interrupted state, or vice versa, using electromagnetic force.

In an electric tool (1) according to the invention, the controller (49) switches the clutch mechanism (C1) from the transmitting state to the interrupted state by generating electromagnetic repulsive force between the magnetic pole (911) and the permanent magnet (921).

This configuration allows the clutch mechanism (C1) to be quickly switched from the transmitting state to the interrupted state.

In an electric tool (1) according to the invention, the the clutch mechanism (C1) turns into the interrupted state when the electromagnet (91) is energized with a current, of which magnitude is equal to or greater than predetermined magnitude, and turns into the transmitting state when the electromagnet (91) is either not energized or energized with a current, of which magnitude is less than the predetermined magnitude.

This configuration may cut down the power consumption in the transmitting state.

In an electric tool (1) according to the invention, the at least one coupling portion (9) further includes an elastic member (922). The elastic member (922) stores elastic energy while the electromagnet (91) is energized. The clutch mechanism (C1) is caused to switch from one state selected from the transmitting state and the interrupted state to the other state selected from the transmitting state and the interrupted state by the elastic energy of the elastic member (922).

This configuration enables switching the clutch mechanism (C1) from the transmitting state to the interrupted state, or vice versa, using the elastic energy stored in the elastic member (922).

In an electric tool (1) according to an eleventh aspect, which may be implemented in conjunction with any one of the sixth to tenth aspects, the clutch mechanism (C1) further includes an input shaft (rotary shaft 132) and an output shaft (gear 83). The input shaft transmits the torque of the motor (15) to the first rotating part (71). The output shaft is arranged coaxially with the input shaft. The output shaft transmits rotational force of the second rotating part (81) to the holder (11).

According to this configuration, the input shaft and the output shaft are arranged coaxially with each other, thus reducing the axial runout of the input shaft and the output shaft.

In an electric tool (1) according to a twelfth aspect, which may be implemented in conjunction with the eleventh aspect, the clutch mechanism (C1) includes a plurality of the coupling portions (9). The plurality of the coupling portions (9) are arranged to surround at least one of the input shaft or the output shaft.

According to this configuration, the plurality of coupling portions (9) are arranged in a circle, thus reducing the bias of the force while the clutch mechanism (C1) is operating. This reduces the chances of the clutch mechanism (C1) tilting. This also reduces the chances of tilt of the clutch mechanism (C1) making it difficult for the clutch mechanism (C1) to operate properly.

In an electric tool (1) according to a thirteenth aspect, which may be implemented in conjunction with any one of the sixth to twelfth aspects, the clutch mechanism (C1) has a fitting structure (including a first recess 713 and a permanent magnet 921). The fitting structure couples, by fitting, the first rotating part (71) and the second rotating part (81) to each other in the transmitting state.

This configuration makes the transmitting state of the clutch mechanism (C1) relatively stabilized.

### Reference Signs List

- 1: Electric Tool
- 3: Transmission Mechanism
- 6: Torque Detection Unit
- 9: Coupling Portion
- 11: Holder
- 12: Tip Tool
- 15: Motor
- 49: Controller
- 60: Current Measuring Unit
- 63: Calculator
- 71: First Rotating Part
- 81: Second Rotating Part
- 83: Gear
- 91: Electromagnet
- 132: Rotary Shaft
- 713: First Recess
- 911: Magnetic Pole
- 921: Permanent Magnet (Fitting Structure)
- 922: Elastic Member
- C1: Clutch Mechanism

## Claims

1. An electric tool (1) comprising:
a holder (11) configured to hold a tip tool (12) thereon;
a motor (15);
a transmission mechanism (3) configured to transmit torque of the motor (15) to the holder (11);
a torque detection unit (6) configured to detect the torque transmitted from the motor (15) to the holder (11);
a clutch mechanism (C1) configured to be switchable from a transmitting state where the torque of the motor (15) is transmitted to the holder (11) to an interrupted state where no torque of the motor (15) is transmitted to the holder (11), and vice versa; and
a controller (49) configured to, when a predetermined condition about the torque detected by the torque detection unit (6) is satisfied, switch the clutch mechanism (C1) from the transmitting state to the interrupted state, wherein
the clutch mechanism (C1) comprising:
a plurality of first recesses (713) provided for a first rotating part (71) that rotates as the motor (15) runs;
a plurality of magnetic poles (911) corresponding one to one to the plurality of first recesses (713), each of the plurality of magnetic poles (911) being inserted into a corresponding one of the plurality of first recesses (713);
a plurality of second recesses (813) provided for a second rotating part (81) coupled either directly or indirectly to the holder (11), the plurality of second recesses (813) corresponding one to one to the plurality of first recesses (713), a pair of first and second recesses (713, 813) corresponding to each other facing each other while the clutch mechanism (C1) is in the transmitting state; and
a plurality of permanent magnet blocks (92) corresponding one to one to the plurality of second recesses (813), each permanent magnet block (92) of the plurality of permanent magnet blocks (92) including a permanent magnet (921), the permanent magnet (921) of each permanent magnet block (92) being inserted into a corresponding one of the plurality of second recesses (813);
in each of the plurality of second recesses (813), an elastic member (922) being interposed between a bottom of a corresponding one second recess (813) of the plurality of second recesses (813) and a corresponding one permanent magnet (921) of the plurality of permanent magnet blocks (92).

2. The electric tool (1) of claim 1, wherein
the predetermined condition includes a condition that the torque detected by the torque detection unit (6) be greater than a threshold value.

3. The electric tool (1) of claim 1 or 2, wherein
the torque detection unit (6) includes:
a current measuring unit (60) configured to measure a torque current flowing through the motor (15); and
a calculator (63) configured to calculate, based on the torque current measured by the current measuring unit (60), the torque transmitted from the motor (15) to the holder (11).

4. The electric tool (1) of any one of claims 1 to 3, wherein
the controller (49) is configured to, while the clutch mechanism (C1) is in the interrupted state and the motor (15) is running, suspend performing control of switching the clutch mechanism (C1) from the interrupted state to the transmitting state.

5. The electric tool (1) of any one of claims 1 to 4, wherein
the transmission mechanism (3) is configured to reduce a rotational velocity of the motor (15), and
the clutch mechanism (C1) is interposed between the motor (15) and the transmission mechanism (3).

6. The electric tool (1) of any one of claims 1 to 5, wherein
the clutch mechanism (C1) further includes at least one coupling portion,
the transmitting state is a state where the first rotating part (71) and the second rotating part (81) are coupled to each other via the at least one coupling portion so that torque of the first rotating part (71) is transmitted to the second rotating part (81), and
the interrupted state is a state where the first rotating part (71) and the second rotating part (81) are decoupled from each other so that no torque of the first rotating part (71) is transmitted to the second rotating part (81).

7. The electric tool (1) of claim 6, wherein
the at least one coupling portion includes: an electromagnet having a magnetic pole (911) of the plurality of magnetic poles (911); and a permanent magnet (921) of the plurality of permanent magnet blocks (92) facing the magnetic pole (911),
the magnetic pole (911) is held by the first rotating part (71) and the permanent magnet (921) is held by the second rotating part (81), and
the controller (49) is configured to switch the clutch mechanism (C1) from the transmitting state to the interrupted state, or vice versa, by changing an energization state of the electromagnet (91).

8. The electric tool (1) of claim 7, wherein
the controller (49) is configured to switch the clutch mechanism (C1) from the transmitting state to the interrupted state by generating electromagnetic repulsive force between the magnetic pole (911) and the permanent magnet (921).

9. The electric tool (1) of claim 7 or 8, wherein
the clutch mechanism (C1) is configured to turn into the interrupted state when the electromagnet (91) is energized with a current, of which magnitude is equal to or greater than predetermined magnitude and turn into the transmitting state when the electromagnet (91) is either not energized or energized with a current, of which magnitude is less than the predetermined magnitude.

10. The electric tool (1) of any one of claims 7 to 9, wherein
the at least one coupling portion includes an elastic member (922) configured to store elastic energy while the electromagnet (91) is energized, and
the clutch mechanism (C1) is caused to switch from one state selected from the transmitting state and the interrupted state to the other state selected from the transmitting state and the interrupted state by the elastic energy of the elastic member (922).

11. The electric tool (1) of any one of claims 6 to 10, wherein
the clutch mechanism (C1) further includes:
an input shaft (132) configured to transmit the torque of the motor (15) to the first rotating part (71); and
an output shaft (83) arranged coaxially with the input shaft (132) and configured to transmit rotational force of the second rotating part (81) to the holder (11).

12. The electric tool (1) of claim 11, wherein
the clutch mechanism (C1) includes a plurality of the coupling portions (8), and
the plurality of the coupling portions (8) are arranged to surround at least one of the input shaft (132) or the output shaft (83).

13. The electric tool (1) of any one of claims 6 to 12, wherein
the clutch mechanism (C1) has a fitting structure configured to couple, by fitting, the first rotating part (71) and the second rotating part (81) to each other in the transmitting state.

## Patentansprüche

1. Elektrowerkzeug (1) umfassend:
eine Halterung (11), die konfiguriert ist, um ein Spitzenwerkzeug (12) daran zu halten;
einen Motor (15);
einen Übertragungsmechanismus (3), der konfiguriert ist, um ein Drehmoment des Motors (15) an die Halterung (11) zu übertragen;
eine Drehmomenterfassungseinheit (6), die konfiguriert ist, um das Drehmoment zu erfassen, das von dem Motor (15) an die Halterung (11) übertragen wird;
einen Kupplungsmechanismus (C1), der konfiguriert ist, um von einem Übertragungszustand, in dem das Drehmoment des Motors (15) an die Halterung (11) übertragen wird, in einen unterbrochenen Zustand, in dem kein Drehmoment des Motors (15) an die Halterung (11) übertragen wird, und umgekehrt umgeschaltet werden zu können; und
eine Steuerung (49), die konfiguriert ist, um, wenn eine vorgegebene Bedingung bezüglich des durch die Drehmomenterfassungseinheit (6) erfassten Drehmoments erfüllt ist, den Kupplungsmechanismus (C1) von dem Übertragungszustand in den unterbrochenen Zustand umzuschalten, wobei
der Kupplungsmechanismus (C1) aufweist:
eine Vielzahl von ersten Aussparungen (713), die für einen ersten rotierenden Teil (71) bereitgestellt sind, der rotiert, wenn der Motor (15) läuft;
eine Vielzahl von Magnetpolen (911), die eins zu eins der Vielzahl von ersten Aussparungen (713) entsprechen, wobei jeder der Vielzahl von Magnetpolen (911) in eine entsprechende der Vielzahl von ersten Aussparungen (713) eingeführt ist;
eine Vielzahl von zweiten Aussparungen (813), die für einen zweiten rotierenden Teil (81) bereitgestellt sind, der entweder direkt oder indirekt mit der Halterung (11) gekoppelt ist, wobei die Vielzahl von zweiten Aussparungen (813) eins zu eins der Vielzahl von ersten Aussparungen (713) entsprechen, wobei ein Paar erster und zweiter Aussparungen (713, 813), die einander entsprechen, einander gegenüberliegen, während sich der Kupplungsmechanismus (C1) in dem Übertragungszustand befindet; und
eine Vielzahl von Permanentmagnetblöcken (92), die eins zu eins der Vielzahl von zweiten Aussparungen (813) entsprechen, wobei jeder Permanentmagnetblock (92) der Vielzahl von Permanentmagnetblöcken (92) einen Permanentmagnet (921) einschließt, wobei der Permanentmagnet (921) jedes Permanentmagnetblocks (92) in eine entsprechende der Vielzahl von zweiten Aussparungen (813) eingeführt ist;
in jeder der Vielzahl von zweiten Aussparungen (813), ein elastisches Element (922), das zwischen einer Unterseite einer entsprechenden zweiten Aussparung (813) der Vielzahl von zweiten Aussparungen (813) und einem entsprechenden Permanentmagneten (921) der Vielzahl von Permanentmagnetblöcken (92) angeordnet ist.

2. Elektrowerkzeug (1) nach Anspruch 1, wobei
die vorgegebene Bedingung eine Bedingung einschließt, dass das durch die Drehmomenterfassungseinheit (6) erfasste Drehmoment größer als ein Schwellenwert ist.

3. Elektrowerkzeug (1) nach Anspruch 1 oder 2, wobei
die Drehmomenterfassungseinheit (6) aufweist:
eine Strommesseinheit (60), die konfiguriert ist, um einen Drehmomentstrom zu messen, der durch den Motor (15) fließt; und
einen Rechner (63), der konfiguriert ist, um basierend auf dem Drehmomentstrom, der von der Strommesseinheit (60) gemessen wird, das Drehmoment zu berechnen, das von dem Motor (15) an die Halterung (11) übertragen wird.

4. Elektrowerkzeug (1) nach einem der Ansprüche 1 bis 3, wobei
die Steuerung (49) konfiguriert ist, um, während sich der Kupplungsmechanismus (C1) in dem unterbrochenen Zustand befindet und der Motor (15) läuft, das Durchführen der Steuerung des Umschaltens des Kupplungsmechanismus (C1) von dem unterbrochenen Zustand in den Übertragungszustand auszusetzen.

5. Elektrowerkzeug (1) nach einem der Ansprüche 1 bis 4, wobei
der Übertragungsmechanismus (3) konfiguriert ist, um eine Rotationsgeschwindigkeit des Motors (15) zu verringern, und
der Kupplungsmechanismus (C1) zwischen dem Motor (15) und dem Übertragungsmechanismus (3) angeordnet ist.

6. Elektrowerkzeug (1) nach einem der Ansprüche 1 bis 5, wobei
der Kupplungsmechanismus (C1) ferner zumindest einen Kopplungsabschnitt aufweist,
der Übertragungszustand ein Zustand ist, in dem der erste rotierende Teil (71) und der zweite rotierende Teil (81) miteinander über den zumindest einen Kopplungsabschnitt gekoppelt sind, so dass das Drehmoment des ersten rotierenden Teils (71) an den zweiten rotierenden Teil (81) übertragen wird, und
der unterbrochene Zustand ein Zustand ist, in dem der erste rotierende Teil (71) und der zweite rotierende Teil (81) voneinander entkoppelt sind, so dass kein Drehmoment des ersten rotierenden Teils (71) an den zweiten rotierenden Teil (81) übertragen wird.

7. Elektrowerkzeug (1) nach Anspruch 6, wobei
der zumindest eine Kopplungsabschnitt aufweist: einen Elektromagneten, der einen Magnetpol (911) der Vielzahl von Magnetpolen (911) aufweist; und einen Permanentmagneten (921) der Vielzahl von Permanentmagnetblöcken (92), der dem Magnetpol (911) gegenüberliegt,
wobei der Magnetpol (911) von dem ersten rotierenden Teil (71) gehalten wird und der Permanentmagnet (921) von dem zweiten rotierenden Teil (81) gehalten wird, und
die Steuerung (49) konfiguriert ist, um den Kupplungsmechanismus (C1) von dem Übertragungszustand auf den unterbrochenen Zustand oder umgekehrt durch Ändern eines Energieversorgungszustands des Elektromagneten (91) umzuschalten.

8. Elektrowerkzeug (1) nach Anspruch 7, wobei
die Steuerung (49) konfiguriert ist, um den Kupplungsmechanismus (C1) von dem Übertragungszustand in den unterbrochenen Zustand durch Erzeugen einer elektromagnetischen Rückstoßkraft zwischen dem Magnetpol (911) und dem Permanentmagneten (921) umzuschalten.

9. Elektrowerkzeug (1) nach Anspruch 7 oder 8, wobei
der Kupplungsmechanismus (C1) konfiguriert ist, um in den unterbrochenen Zustand überzugehen, wenn der Elektromagnet (91) mit einem Strom gespeist wird, dessen Stärke so groß wie oder größer als die vorgegebene Stärke ist, und in den Übertragungszustand überzugehen, wenn der Elektromagnet (91) entweder nicht mit einem Strom gespeist wird oder mit einem Strom gespeist wird, dessen Stärke kleiner als die vorgegebene Stärke ist.

10. Elektrowerkzeug (1) nach einem der Ansprüche 7 bis 9, wobei
der zumindest eine Kopplungsabschnitt ein elastisches Element (922) aufweist, das konfiguriert ist, um potentielle Energie zu speichern, während der Elektromagnet (91) mit Energie versorgt wird, und
der Kupplungsmechanismus (C1) dazu gebracht wird, von einem Zustand, der aus dem Übertragungszustand und dem unterbrochenen Zustand ausgewählt wird, in den anderen Zustand, der aus dem Übertragungszustand und dem unterbrochenen Zustand ausgewählt wird, durch die potentielle Energie des elastischen Elements (922) umzuschalten.

11. Elektrowerkzeug (1) nach einem der Ansprüche 6 bis 10, wobei der Kupplungsmechanismus (C1) ferner aufweist:
eine Antriebswelle (132), die konfiguriert ist, um das Drehmoment des Motors (15) an den ersten rotierenden Teil (71) zu übertragen; und
eine Abtriebswelle (83), die koaxial mit der Antriebswelle (132) angeordnet ist und konfiguriert ist, um die Rotationskraft des zweiten rotierenden Teils (81) an die Halterung (11) zu übertragen.

12. Elektrowerkzeug (1) nach Anspruch 11, wobei
der Kupplungsmechanismus (C1) eine Vielzahl der Kopplungsabschnitte (8) aufweist, und
die Vielzahl der Kopplungsabschnitte (8) angeordnet sind, um die Antriebswelle (132) und/oder die Abtriebswelle (83) zu umgeben.

13. Elektrowerkzeug (1) nach einem der Ansprüche 6 bis 12, wobei
der Kupplungsmechanismus (C1) eine Passstruktur aufweist, die konfiguriert ist, um durch Passung den ersten rotierenden Teil (71) und den zweiten rotierenden Teil (81) in dem Übertragungszustand miteinander zu koppeln.

## Revendications

1. Outil électrique (1) comprenant :
un support (11) configuré pour maintenir un outil à pointe (12) sur celui-ci ;
un moteur (15) ;
un mécanisme de transmission (3) configuré pour transmettre le couple du moteur (15) au support (11) ;
une unité de détection de couple (6) configurée pour détecter le couple transmis du moteur (15) au support (11) ;
un mécanisme d'embrayage (C1) configuré pour pouvoir être commuté d'un état de transmission, dans lequel le couple du moteur (15) est transmis au support (11), dans un état interrompu, dans lequel aucun couple du moteur (15) n'est transmis au support (11), et vice versa ; et
un dispositif de commande (49) configuré pour, lorsqu'une condition prédéterminée concernant le couple détecté par l'unité de détection de couple (6) est satisfaite, commuter le mécanisme d'embrayage (C1) de l'état de transmission dans l'état interrompu, dans lequel
le mécanisme d'embrayage (C1) comprend :
une pluralité de premiers évidements (713) fournis pour une première partie de rotation (71) qui tourne alors que le moteur (15) tourne ;
une pluralité de pôles magnétiques (911) correspondant un à un à la pluralité de premiers évidements (713), chaque pôle magnétique de la pluralité de pôles magnétiques (911) étant inséré dans un premier évidement correspondant de la pluralité de premiers évidements (713) ;
une pluralité de deuxièmes évidements (813) fournis pour une deuxième partie de rotation (81) couplée soit directement soit indirectement au support (11), la pluralité de deuxièmes évidements (813) correspondant à un à un à la pluralité de premiers évidements (713), une paire de premier et deuxième évidements (713, 813) correspondant l'un à l'autre tout en étant tournés l'un vers l'autre alors que le mécanisme d'embrayage (C1) est dans l'état de transmission ; et
une pluralité de blocs d'aimant permanent (92) correspondant un à un à la pluralité de deuxièmes évidements (813), chaque bloc d'aimant permanent (92) de la pluralité de blocs d'aimant permanent (92) comportant un aimant permanent (921), l'aimant permanent (921) de chaque bloc d'aimant permanent (92) étant inséré dans un deuxième évidement correspondant de la pluralité de deuxièmes évidements (813) ;
dans chaque deuxième évidement de la pluralité de deuxièmes évidements (813), un élément élastique (922) étant intercalé entre un fond d'un deuxième évidement (813) correspondant de la pluralité de deuxièmes évidements (813) et un aimant permanent (921) correspondant de la pluralité de blocs d'aimant permanent (92).

2. Outil électrique (1) selon la revendication 1, dans lequel
la condition prédéterminée comporte une condition selon laquelle le couple détecté par l'unité de détection de couple (6) est supérieur à une valeur de seuil.

3. Outil électrique (1) selon la revendication 1 ou 2, dans lequel
l'unité de détection de couple (6) comporte :
une unité de mesure de courant (60) configurée pour mesurer un courant de couple circulant à travers le moteur (15) ; et
un calculateur (63) configuré pour calculer, sur la base du courant de couple mesuré par l'unité de mesure de courant (60), le couple transmis du moteur (15) au support (11).

4. Outil électrique (1) selon l'une quelconque des revendications 1 à 3, dans lequel
le dispositif de commande (49) est configuré pour, alors que le mécanisme d'embrayage (C1) est dans l'état interrompu et que le moteur (15) tourne, suspendre l'exécution de la commande de commutation du mécanisme d'embrayage (C1) de l'état interrompu dans l'état de transmission.

5. Outil électrique (1) selon l'une quelconque des revendications 1 à 4, dans lequel
le mécanisme de transmission (3) est configuré pour réduire une vitesse de rotation du moteur (15), et
le mécanisme d'embrayage (C1) est intercalé entre le moteur (15) et le mécanisme de transmission (3).

6. Outil électrique (1) selon l'une quelconque des revendications 1 à 5, dans lequel
le mécanisme d'embrayage (C1) comporte en outre au moins une partie de couplage,
l'état de transmission est un état dans lequel la première partie de rotation (71) et la deuxième partie de rotation (81) sont couplées l'une à l'autre par l'intermédiaire de l'au moins une partie de couplage de telle sorte que le couple de la première partie de rotation (71) est transmis à la deuxième partie de rotation (81), et
l'état interrompu est un état dans lequel la première partie de rotation (71) et la deuxième partie de rotation (81) sont découplées l'une de l'autre de telle sorte qu'aucun couple de la première partie de rotation (71) n'est transmis à la deuxième partie de rotation (81).

7. Outil électrique (1) selon la revendication 6, dans lequel
l'au moins une partie de couplage comporte : un électroaimant présentant un pôle magnétique (911) de la pluralité de pôles magnétiques (911) ; et un aimant permanent (921) de la pluralité de blocs d'aimant permanent (92) tourné vers le pôle magnétique (911),
le pôle magnétique (911) est maintenu par la première partie de rotation (71) et l'aimant permanent (921) est maintenu par la deuxième partie de rotation (81), et
le dispositif de commande (49) est configuré pour commuter le mécanisme d'embrayage (C1) de l'état de transmission dans l'état interrompu, ou vice versa, en changeant un état d'excitation de l'électroaimant (91).

8. Outil électrique (1) selon la revendication 7, dans lequel
le dispositif de commande (49) est configuré pour commuter le mécanisme d'embrayage (C1) de l'état de transmission dans l'état interrompu en générant une force de répulsion électromagnétique entre le pôle magnétique (911) et l'aimant permanent (921).

9. Outil électrique (1) selon la revendication 7 ou 8, dans lequel
le mécanisme d'embrayage (C1) est configuré pour passer dans l'état interrompu lorsque l'électroaimant (91) est excité avec un courant, dont l'amplitude est égale ou supérieure à l'amplitude prédéterminée, et pour passer dans l'état de transmission lorsque l'électroaimant (91) n'est pas excité ou est excité avec un courant, dont l'amplitude est inférieure à l'amplitude prédéterminée.

10. Outil électrique (1) selon l'une quelconque des revendications 7 à 9, dans lequel
l'au moins une partie de couplage comporte un élément élastique (922) configuré pour stocker de l'énergie élastique pendant que l'électroaimant (91) est excité, et
le mécanisme d'embrayage (C1) est amené à passer d'un état choisi parmi l'état de transmission et l'état interrompu à l'autre état choisi parmi l'état de transmission et l'état interrompu par l'énergie élastique de l'élément élastique (922).

11. Outil électrique (1) selon l'une quelconque des revendications 6 à 10, dans lequel
le mécanisme d'embrayage (C1) comporte en outre :
un arbre d'entrée (132) configuré pour transmettre le couple du moteur (15) à la première partie de rotation (71) ; et
un arbre de sortie (83) disposé coaxialement à l'arbre d'entrée (132) et configuré pour transmettre une force de rotation de la deuxième partie de rotation (81) au support (11).

12. Outil électrique (1) selon la revendication 11, dans lequel
le mécanisme d'embrayage (C1) comporte une pluralité de parties de couplage (8), et
la pluralité de parties de couplage (8) sont disposées pour entourer au moins un de l'arbre d'entrée (132) ou de l'arbre de sortie (83).

13. Outil électrique (1) selon l'une quelconque des revendications 6 à 12, dans lequel
le mécanisme d'embrayage (C1) présente une structure d'ajustement configurée pour coupler, par ajustement, la première partie de rotation (71) et la deuxième partie de rotation (81) l'une à l'autre dans l'état de transmission.
